(19) Europäisches Patentamt

European Patent Office

Office européen des brevets

(11) **EP 2 581 799 A1**

(12) **EUROPEAN PATENT APPLICATION**

(43) Date of publication:
**17.04.2013 Bulletin 2013/16**

(51) Int Cl.:
***G05D 16/20*** (2006.01)　　***F02M 21/02*** (2006.01)
***H01M 8/04*** (2006.01)

(21) Application number: **12187956.3**

(22) Date of filing: **10.10.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.10.2011　JP 2011225906**

(71) Applicant: **Honda Motor Co., Ltd.
Tokyo 107-8556 (JP)**

(72) Inventors:
• **Kato, Koichi
Saitama, 351-0193 (JP)**
• **Takaku, Koichi
Saitama, 351-0193 (JP)**
• **Miura, Taneaki
Saitama, 351-0193 (JP)**
• **Ozaki, Hiroyasu
Saitama, 351-0193 (JP)**
• **Asano, Saneto
Saitama, 351-0193 (JP)**

(74) Representative: **Feller, Frank
Weickmann & Weickmann
Postfach 860 820
81635 München (DE)**

(54) **Pressure-reducing valve with injector and fuel cell system including pressure-reducing valve**

(57)　　A pressure-reducing valve (5) with an injector of the present invention includes a shuttle valve body (13), a shuttle valve seat (18)in which the shuttle valve body (13) is capable of coming into contact with and be separated, a back-pressure chamber (25), a back-pressure channel (26) that communicates with the back-pressure chamber (25) and discharges the fluid of the back-pressure chamber (25), a biasing portion (14) that biases the shuttle valve body (13) in a direction of coming into contact with the shuttle valve seat (18), and an injector (30) that adjusts an intermittent time interval of the fluid in the back-pressure chamber (25) discharged through the back-pressure channel (26) and discharges the adjusted fluid to a discharging port (15) or a channel that communicates with the discharging port (15).

FIG. 1

**Description**

BACKGROUND OF THE INVENTION

Field of the Invention

The present invention relates to a pressure-reducing valve with an injector and a fuel cell system including the pressure-reducing valve.

Description of Related Art

Generally, in a fuel cell system in which fuel is supplied from a high-pressure fuel tank to a fuel cell and electricity is generated, a cut off valve and a pressure-reducing valve are provided in a downstream of the fuel tank, and high-pressure fuel gas which is discharged from the fuel tank is depressurized by the pressure-reducing valve and is supplied to the fuel cell.

In addition, there is a fuel circulation type fuel cell system in which fuel off-gas discharged from the fuel cell is supplied to the fuel cell again as fuel, and an ejector is widely used as a device that circulates the fuel off gas.

Moreover, a fuel cell system is known in which an injector is installed so as to be directly connected to the ejector in the downstream of the pressure-reducing valve and in the upper stream of the ejector, and suction capacity of the ejector increases due to a negative pressure that is generated when the injector is operated (for example, refer to Japanese Unexamined Patent Application, First Publication No. 2008-196401).

However, in the conventional fuel cell system in which the injector directly connected to the ejector is installed in the downstream of the pressure-reducing valve, since pressure of the injector is adjusted within a relatively narrow supply pressure range, a pressure-reducing valve having high accuracy is required, and there is a problem in that the costs are increased.

In addition, if the operating pressure increases, it is difficult to increase an opening area of the injector from the relationship of pressure resistance, and the opening area must be decreased. However, since a flow rate increases in the injector having a small opening area, in order to obtain a high flow rate, a plurality of injectors must be disposed in parallel, and thereby, problems such as an increase in the costs of the system, an increase in the volume, and an increase in the weight occur.

SUMMARY OF THE INVENTION

Therefore, an object of the present invention is to provide a pressure-reducing valve with an injector and a fuel cell including the pressure-reducing valve capable of achieving decreases in the size, the weight, and the costs.

The present invention adopts the following means to solve the above-described problems.

According to a first aspect of the present invention, a pressure-reducing valve with an injector is provided, including: a body that includes an internal space; an introduction channel provided in the body and introduces a high-pressure fluid into the internal space; a discharging channel provided in the body and discharges a depressurized fluid from the internal space; a shuttle valve body disposed between the introduction channel and the discharging channel in the internal space of the body; a shuttle valve seat which is provided in a position close to the internal space in the discharging channel and in which the shuttle valve body being capable of coming into contact with and being separated; a back-pressure chamber surrounded by a back surface of the shuttle valve body and a wall surface of the internal space of the body and communicates with the introduction channel through a gap between the shuttle valve body and the wall surface of the internal space; a back-pressure channel that communicates with the back-pressure chamber and discharges the fluid of the back-pressure chamber; a biasing portion that biases the shuttle valve body in a direction of coming into contact with the shuttle valve seat; and an injector that adjusts an intermittent time interval of the fluid in the back-pressure chamber discharged through the back-pressure channel and discharges the adjusted fluid to the discharging channel or a channel that communicates with the discharging channel.

According to a second aspect of the present invention, a fuel cell system is provided, including: a fuel cell to which fuel is supplied from a fuel supply passage and an oxidant is supplied from an oxidant supply system and in which electricity is generated; and a fuel circulation passage that supplies fuel off-gas discharged from the fuel cell to the fuel cell as fuel again, wherein the fuel supply passage includes a high-pressure fluid source, a cutoff valve, the pressure-reducing valve with the injector according to the first aspect, and an ejector for circulating fuel in this order from an upper stream of the fuel supply passage.

According to the first aspect of the present invention, the shuttle valve body moves in a direction (valve opening direction) of being separated from the shuttle valve seat due to the operation of the injector, and circulation of a required flow rate can be secured. Here, since the object of operating the injector is to open the shuttle valve body by adjusting the pressure in the back-pressure chamber not to secure the required flow rate using the injector itself, only the one injector which is operated by a high fluid pressure is required. Moreover, the injector adjusts the pressure of the back-pressure chamber, and as a result, the injector has a function which adjusts the pressures in the discharging channel.

In addition, since the structure of the pressure-reducing valve is simple and only the one injector is required, decreases in the size, the weight, and the costs of the pressure-reducing valve can be achieved.

Moreover, since the cutoff valve is provided in the upper stream of the pressure-reducing valve and the high-pressure fluid can be shielded by the cutoff valve, stability increases, and a complete seal of the injector is not necessarily needed.

According to the second aspect of the present invention, due to the decreases in the size and the weight of the pressure-reducing valve, the decrease in the weight and compactness of the fuel cell can be realized, and the decrease in the costs can be achieved. In addition, the supply of the fuel gas according to the required power generation amount can be achieved using the control of the duty ratio of the injector.

Moreover, since the cutoff valve is provided in the upper stream of the pressure-reducing valve and the high-pressure fluid can be shielded by the cutoff valve, stability of the fuel cell system increases. In addition, since a complete seal of the injector is not necessarily needed, it is possible to simplify the fuel cell system.

## BRIEF DESCRIPTION OF THE DRAWINGS

FIG. 1 is a schematic block diagram of an embodiment of a fuel cell system according to the present invention.
FIG. 2 is a block diagram of an embodiment of a pressure-reducing valve with an injector according to the present invention, in which a portion is shown in a cross-section.
FIG. 3 is a graph showing a relationship of a tank pressure, an outlet pressure of the injector, and a gas flow rate.
FIG. 4 is a characteristic diagram of the flow rate of the injector.
FIG. 5 is an example of a duty ratio map of the injector.
FIG. 6 is a flowchart showing a feedback control of a duty ratio of the injector.
FIG. 7 is a graph illustrating effects when the feedback control of the duty ratio of the injector is performed.

## DETAILED DESCRIPTION OF THE INVENTION

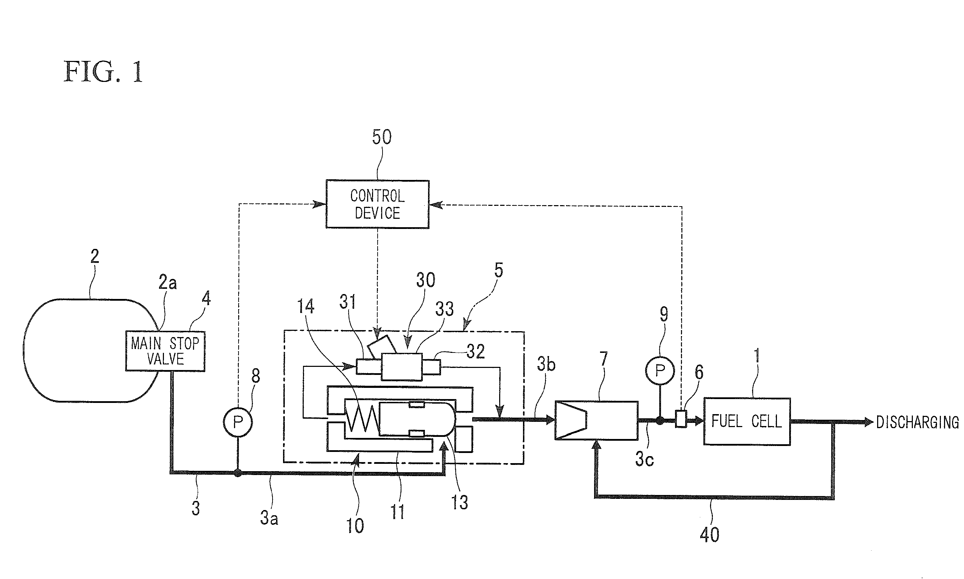

Hereinafter, embodiments of a pressure-reducing valve with an injector and a fuel cell system including the pressure-reducing valve according to the present invention will be described with reference to FIGS. 1 to 7.

FIG. 1 is a schematic block diagram of the fuel cell system, and the fuel cell system in the present embodiment supplies electric power to a motor which is mounted on a fuel cell vehicle and is a driving source, and the like.

In FIG. 1, a reference numeral 1 indicates a fuel cell stack (fuel cell) to which hydrogen as fuel and oxygen as an oxidant are supplied and electricity is generated. For example, the fuel cell stack 1 is a Polymer Electrolyte Fuel Cell (PEFC), and a single cell in which a Membrane Electrode Assembly (MEA) is interposed by separators (not shown) is laminated so as to be a plurality of layers.

Hydrogen gas having a predetermined pressure and a predetermined flow rate is supplied from a hydrogen tank (high-pressure fluid source) 2 which stores high-pressure hydrogen gas (high-pressure fluid) to the fuel cell stack 1 via a hydrogen supply channel 3, and air which includes oxygen is supplied in a predetermined pressure and a predetermined flow rate via an air supply system (not shown, oxidant supply system).

The hydrogen tank 2 is formed in a tubular shape in which both ends in the longitudinal direction are an substantially hemispheric shape, one end in the longitudinal direction is opened, a main stop valve (cutoff valve) 4 is mounted to this opening 2a, and the opening is blocked. The main stop valve 4 is a cutoff valve which makes the inner portion of the hydrogen tank 2 and the hydrogen supply channel 3 communicate with and be cut off from each other.

In the hydrogen supply channel 3, a pressure-reducing valve with an injector (hereinafter, abbreviated as a "pressure-reducing valve") 5 and an ejector 7 are provided from the upper stream of the hydrogen supply channel. Moreover, in descriptions below, in the hydrogen supply channel 3, a channel which connects the main stop valve 4 and the pressure-reducing valve 5 is referred to as a first hydrogen supply channel 3a, a channel which connects the pressure-reducing valve 5 and the ejector 7 is referred to as a second hydrogen supply channel 3b, and a channel which connects the ejector 7 and the fuel cell stack 1 is referred to as a third hydrogen supply channel 3c.

The high-pressure (for example, 35 MPa, 70 MPa, and the like) hydrogen gas which is discharged from the hydrogen tank 2 is depressurized to a predetermined pressure (for example, 1 MPa or less) by the pressure-reducing valve 5 and is supplied to the ejector 7. The pressure-reducing valve 5 will be described in detail below. The ejector 7 is a device which returns hydrogen off-gas to the hydrogen supply channel 3 again in order to use unused hydrogen by circulating the hydrogen off-gas discharged from the fuel cell stack 1. The hydrogen off-gas discharged from the fuel cell stack 1 is supplied to the ejector 7 via a circulation channel (fuel circulation passage) 40.

Here, the hydrogen tank 2, the main stop valve 4, the hydrogen supply channel 3, the pressure-reducing valve 5, and the ejector 7 configure a fuel supply passage. Therefore, the fuel supply passage includes the hydrogen tank (high-pressure fluid source) 2, the main stop valve (cutoff valve) 4, the pressure-reducing valve with the injector 5, and the ejector 7 for circulating fuel in this order from the upper stream of the fuel supply passage.

A pressure sensor 8 is provided in the first hydrogen supply channel 3 a, and a flow rate sensor 6 and a pressure sensor 9 are provided in the third hydrogen supply channel 3c. The pressure sensor 8 detects a pressure of the hydrogen gas supplied from the hydrogen tank 2 and substantially corresponds to a pressure in the hydrogen tank 2. The pressure sensor 9 detects a pressure of the hydrogen gas supplied to the fuel cell stack 1, and the flow rate sensor 6 measures a flow rate of the hydrogen gas supplied to the fuel cell stack 1.

These sensors 6, 8, and 9 output electrical signals corresponding to the detected values to a control device 50. As described below, the control device 50 performs duty ratio control of the injector 30 of the pressure-reducing valve 5 and controls the flow rate or the pressure of the hydrogen gas which is supplied to the fuel cell stack 1.

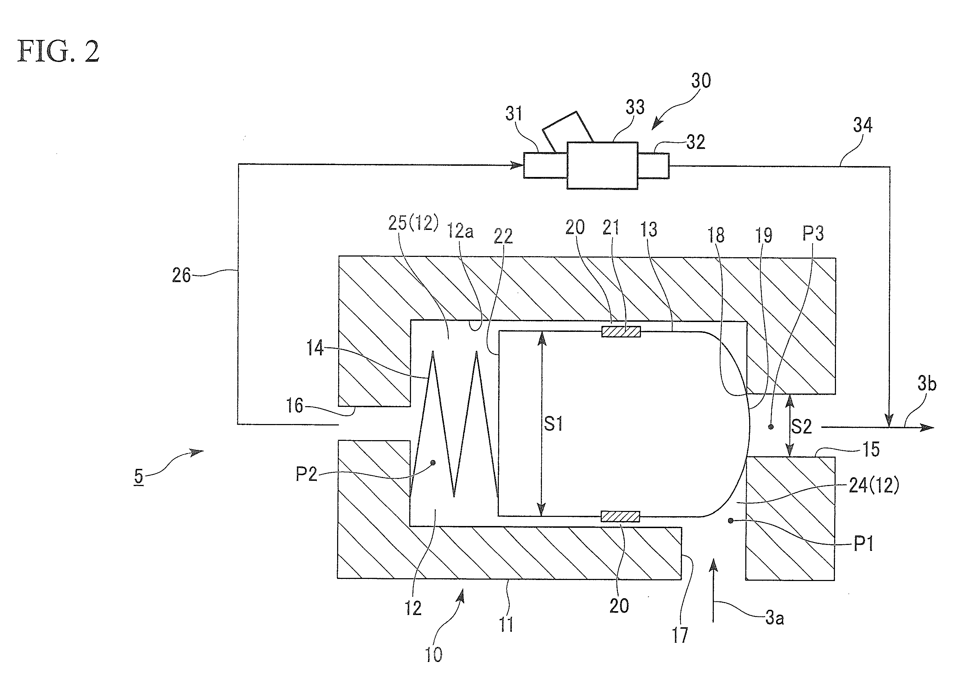

Next, the pressure-reducing valve 5 will be described in detail with reference to FIG. 2. The pressure-reducing valve 5 includes a shuttle valve 10 and the injector 30 of high-pressure specification.

The shuttle valve 10 includes a body 11 in which a cylindrical valve chamber (internal space) 12 is formed inside, shuttle valve body 13 which is accommodated so as to move in the axial direction in the valve chamber 12, and a spring (basing portion) 14 which biases the shuttle valve body 13 in a valve closing direction.

A discharging port (discharging channel) 15 which communicates with the valve chamber 12 is provided in one end side (right end in FIG. 2) in the axis direction of the body 11, a back-pressure outlet 16 which communicates with the valve chamber 12 is provided in the other end side (left end in FIG. 2) in the axial direction of the body 11, and an introduction port (introduction channel) 17 which communicates with the valve chamber 12 is provided in a portion which is close to the discharging port 15 in the outer circumferential portion of the body 11.

The introduction port 17 is connected to the first hydrogen supply channel 3a and introduces the hydrogen gas supplied from the hydrogen tank 2 into the valve chamber 12. The discharging port 15 is connected to the second hydrogen supply channel 3b and supplies the hydrogen gas discharged from the discharging port 15 to the fuel cell stack 1.

A valve seat (shuttle valve seat) 18 in which the shuttle valve body 13 can come into contact and be separated is formed on the end which is provided at the position close to the high-pressure chamber 24 in the discharging port 15.

The shuttle valve body 13 which is accommodated in the valve chamber 12 is a substantially columnar shape, and a main surface 19 which faces the valve seat 18 is a part of a spherical shell and is formed in a convex curved surface. An orifice ring 21 is mounted on the outer circumferential portion of the shuttle valve body 13. A ring-like gap 20 is formed between the orifice ring and the wall surface (wall surface) 12a of the valve chamber 12. The orifice ring 21 moves in the axial direction (horizontal direction in FIG. 2) in the valve chamber 12 along with the shuttle valve body 13 while maintaining the ring-like gap 20 between the orifice ring 21 and the wall surface 12a of the valve chamber 12.

The valve chamber 12 is partitioned into two spaces of a right space and a left space by the orifice ring 21, and the space which communicates with the introduction port 17 and the discharging port 15 becomes the high-pressure chamber 24, the space which communicates with the back-pressure outlet 16 becomes a back-pressure chamber 25, and the high-pressure chamber 24 and the back-pressure chamber 25 communicate with each other through the ring-like gap 20.

In addition, the introduction port 17 is always disposed at a position directly communicating with the high-pressure chamber 24 regardless of an axial movement of the shuttle valve body 13, and the introduction port 17 does not directly communicate with the back-pressure chamber 25.

That is, the back-pressure chamber 25 is formed so as to be surrounded by the back surface 22 of the shuttle valve body 13 and the wall surface 12a of the valve chamber 12, and communicates with the introduction port 17 through the gap 20 between the orifice ring 21 and the wall surface 12a of valve chamber 12.

The spring 14 is accommodated in the back-pressure chamber 25, and is provided between the end surface of near the back-pressure outlet 16 of the valve chamber 12 and the back surface 22 of the shuttle valve body 13. The spring 14 biases the shuttle valve body 13 in the direction (that is, valve closing direction) in which the shuttle valve body comes into contact with the valve seat 18.

In the shuttle valve 10, when the shuttle valve body 13 is separated from the valve seat 18, the introduction port 17 and the discharging port 15 communicate with each other through the high-pressure chamber 24. Therefore, the shuttle valve body 13 is disposed between the introduction port 17 and the discharging port 15 in the valve chamber 12.

The back-pressure outlet 16 of the shuttle valve 10 is connected to an inlet portion 31 of the injector 30 through a back-pressure channel 26, and the outlet nozzle 32 of the injector 30 is connected to the second hydrogen supply channel 3b, which is connected to the discharging port 15 of the shuttle valve 10, through a discharging channel 34. The injector 30 adjusts an intermittent time interval of the hydrogen gas of the back-pressure chamber 25 and discharges the adjusted hydrogen gas to the second hydrogen supply channel 3b.

Since the injector 30 is well-known, the detailed descriptions of the configuration are omitted and are schematically described below.

The injector 30 has an opening and closing drive portion 33 in the upper stream of the outlet nozzle 32. The opening and closing drive portion 33 is electrically connected to the control device 50, and the opening and closing of the channel is controlled according to output signals from the control device 50. For example, the opening and closing drive portion 33 has the configuration of an electromagnetic drive-type on-off valve in which the valve body is directly driven by a predetermined drive cycle with an electromagnetic driving force and is separated from the valve seat, and the flow rate and the pressure of the hydrogen gas to the outlet nozzle 32 can be adjusted. According to the control of the opening and closing drive portion 33, supply of the hydrogen gas to the outlet nozzle 32 can be interrupted, and mainstream gas can be intermittently supplied to the outlet nozzle 32.

For example, the opening and closing drive portion 33 includes a main valve portion which includes a valve body and a valve seat, and a solenoid portion which includes a coil, an iron core, and a plunger. The opening and closing drive portion 33 is used basically in two positions of "open" and "close" by ON and OFF of current which is supplied to the coil. That is, opened time and an opening and closing timing in the opening and closing drive portion 33 are changed (that is, the intermittent time interval is adjusted), and thereby, the injector 30 controls a supply flow rate of the hydrogen gas to the outlet nozzle 32. As the control method, it is preferable to use a duty control which changes a duty ratio of pulse-like excitation current which is supplied to the coil of opening and closing drive portion 33. Here, the duty ratio is obtained by dividing ON time of the pulse-like excitation current by a switching period in which ON time and OFF time of the pulse-like excitation current are added.

A valve opening operation of the pressure-reducing valve 5 configured as described above will be described.

In the pressure-reducing valve 5 when the valve is closed, since current does not flow to the coil of the opening and closing drive portion 33 of the injector 30, the injector 30 is closed. Moreover, the shuttle valve body 13 which is biased by the spring 14 is seated on the valve seat 18, and the pressure-reducing valve 5 is closed. At this time, since the pressure in the hydrogen tank 2 is applied to the back-pressure chamber 25 through the first hydrogen supply channel 3a, the introduction port 17, the high-pressure chamber 24, and the ring-like gap 20 and the pressure is applied to the inlet portion 31 of the injector 30 through the back-pressure channel 26, these areas reach a high pressure which is substantially the same as the pressure in the hydrogen tank 2. On the other hand, since the shuttle valve 10 and the injector 30 are closed, the pressure in the hydrogen tank 2 is not applied to the discharging port 15 and the discharging channel 34 and the discharging port 15 and the discharging channel 34 reach a low pressure.

When the pressure-reducing valve 5 of the closed state is opened, current flows to the coil of the opening and closing drive portion 33 of the injector 30, and the injector 30 is opened. Then, the hydrogen gas of the back-pressure chamber 25 of the shuttle valve 10 is supplied from the discharging port 15 to the injector 30 through the back-pressure channel 26, and the hydrogen gas discharged from the outlet nozzle 32 is discharged to the second hydrogen supply channel 3b through the discharging channel 34. As a result, the pressure in the discharging port 15 of the shuttle valve 10 which is connected to the second hydrogen supply channel 3b increases. On the other hand, the pressure in the back-pressure chamber 25 decreases due to discharging of the hydrogen gas to the back-pressure channel 26. However, since the back-pressure chamber 25 communicates with the high-pressure chamber 24 through the ring-like gap 20 between the orifice ring 21 and the wall surface 12a of the valve chamber 12, the hydrogen gas of the first hydrogen supply channel 3a which communicates with the hydrogen tank 2 flows into the back-pressure chamber 25 through the introduction port 17, the high-pressure chamber 24, and the gap 20, and the pressure in the back-pressure chamber 25 increases. However, since the opening area of the gap 20 is small, the entire pressure decrease of the back-pressure chamber 25 cannot be supplemented. As a result, pressure P2 in the back-pressure chamber 25 is smaller than pressure P1 in the high-pressure chamber 24 which is approximately equal to the pressure in the hydrogen tank 2 and is larger than pressure P3 in the discharging port 15 (P1 > P2 > P3).

In addition, a force which pushes the shuttle valve body 13 in a valve opening direction (left side in FIG. 2) acts on the shuttle valve body 13 based on the pressure difference. If the force exceeds the biasing force in the valve closing direction (right side in FIG. 2) due to the spring 14, the shuttle valve body 13 is separated from the valve seat 18 and the shuttle valve 10 is opened.

When the shuttle valve 10 is opened, the hydrogen gas in the first hydrogen supply channel 3a flows from the introduction port 17 to the discharging port 15 through the high-pressure chamber 24 and further flows into the second hydrogen supply channel 3b. Moreover, when the shuttle valve 10 is opened, the flow rate of the hydrogen gas which flows in the shuttle valve 10 is significantly larger than the flow rate of the hydrogen gas which flows from the back-pressure chamber 25 into the second hydrogen supply channel 3b through the injector 30.

Next, an operating principle of the shuttle valve 10 will be described. As shown in FIG. 2, if a pressure-receiving area S 1 in the back surface 22 of the shuttle valve body 13 is represented by S 1 and a pressure-receiving area S2 in the discharging port 15 of the shuttle valve body 13 is represented by S2, the shuttle valve 10 is opened when an inequality expression such as the following Equation 1 is established.

Moreover, FS is an elastic force of the spring 14.

## Equation 1

$$(S1-S2) \times P1 + S2 \times P3 > S1 \times P2 + FS$$

Moreover, after the shuttle valve body 13 is separated from the valve seat 18, at the time when the following Equation 2 is established, the movement of the shuttle valve body 13 in the valve opening direction stops, and a stroke amount of the shuttle valve body 13 is determined.

## Equation 2

$$(S1-S2) \times P1 + S2 \times P3 = S1 \times P2 + FS$$

Therefore, the stroke amount when the shuttle valve 10 is opened is determined according to the pressure P1 in the first hydrogen supply channel 3a, the pressure P2 in the back-pressure chamber 25, and the pressure P3 in the discharging port 15, and as a result, the opening area when the shuttle valve 10 is opened is determined, and the flow rate of the hydrogen gas which circulates through the shuttle valve 10 is determined. Moreover, since the pressure P1 in the first hydrogen supply channel 3 a is substantially equal to the pressure in the hydrogen tank 2, in descriptions below, P1 may be also referred to as the pressure in the hydrogen tank 2.

Incidentally, in the pressure-reducing valve 5, since energization to the coil of the opening and closing drive portion 33 of the injector 30 is controlled at a duty ratio, the pressure in the back-pressure chamber 25 can be adjusted. Therefore, since the energization to the coil of the opening and closing drive portion 33 of the injector 30 is controlled at a duty ratio, it is possible to control the amount of the hydrogen gas which is supplied to the fuel cell stack 1.

For example, when it is preferable that the amount of the hydrogen gas supplied to the fuel cell stack 1 be small, in other words, when consumption of the hydrogen gas is decreased, the pressure P2 in the back-pressure chamber 25 is made close to the pressure P1 in the hydrogen tank 2 by controlling the duty ratio of the injector 30 to be lowered, a valve opening stroke of the shuttle valve body 13 is decreased (also includes zero), and the opening area of the shuttle valve 10 is decreased.

On the other hand, when the amount of the hydrogen gas supplied to the fuel cell stack 1 increases, in other words, when consumption of the hydrogen gas increases, the pressure P2 in the back-pressure chamber 25 is made sufficiently smaller than the pressure P1 in the hydrogen tank 2 by controlling the duty ratio of the injector 30 to be increased, a valve opening stroke of the shuttle valve 10 increases and the required opening area is secured.

Moreover, the flow rate (hereinafter, referred to as a "required flow rate") of the hydrogen gas which is required in the fuel cell stack 1 can be determined from a required power generation amount with respect to the fuel cell stack 1. However, if a purge amount of the hydrogen gas which is discharged from the fuel cell stack 1 outside the system is added to the required power generation amount, the required flow rate of the hydrogen gas can be determined more precisely.

Next, a method will be described in which a relationship of the required flow rate of the hydrogen gas, the pressure in the hydrogen tank 2 (hereinafter, abbreviated as a "tank pressure") P1, and the duty ratio of the injector 30 is stored in a map in advance and the duty ratio of the injector 30 is determined using the map.

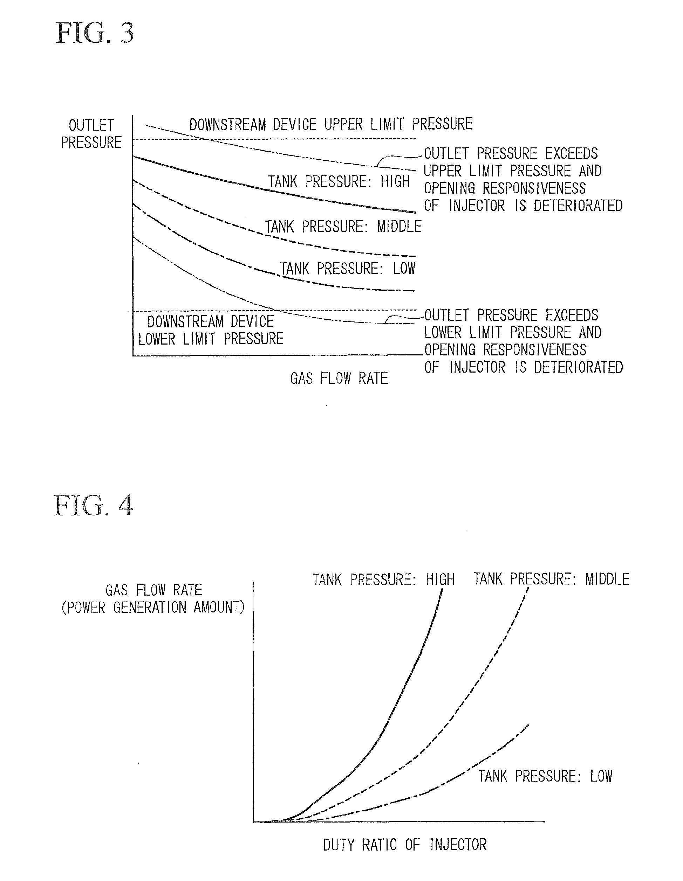

First, according to an experiment, a relationship between the pressure (hereinafter, abbreviated as an "outlet pressure") P3 in the discharging port 15 and the flow rate of the gas which circulates through the pressure-reducing valve 5 for each tank pressure P1 is obtained. FIG. 3 shows an example of the relationship between the tank pressure P1, the outlet pressure P3, and the gas flow rate. When the tank pressure and the outlet pressure are compared with each other at the same gas flow rate, the outlet pressure P3 can be increased according to the increase of the tank pressure P1.

Incidentally, since devices such as the ejector 7 are provided in the downstream of the pressure-reducing valve 5, the outlet pressure P3 is subjected to restriction of the pressure conditions of the device of the downstream. That is, the outlet pressure P3 must be between a lower limit pressure and an upper limit pressure of the device of the downstream. Therefore, in order not to deviate from the pressure range, the range of the duty ratio of the injector 30 is determined for each tank pressure P1.

For example, when the tank pressure P1 is high, the gas flow rate is small, and the outlet pressure P3 exceeds the upper limit pressure, in the tank pressure P1, the gas flow rate is controlled within the range in which the outlet pressure P3 does not exceed the upper limit pressure. In addition, the gas flow rate when the outlet pressure P3 is equal to the upper limit pressure is set to a minimum flow rate in the tank pressure P1, and the duty ratio of the injector 30 at this time is set to the lower limit value of the duty ratio.

Similarly, when the tank pressure P1 is low, the gas flow rate is large, and the outlet pressure P3 is less than the lower limit pressure, in the tank pressure P1, the gas flow rate is controlled within the range in which the outlet pressure P3 is not less than the lower limit pressure. The gas flow rate when the outlet pressure P3 is equal to the lower limit pressure is set to a maximum flow rate in the tank pressure P1, and the duty ratio of the injector 30 at this time is set to the upper limit value of the duty ratio.

Subsequently, within the range of the duty ratio of the injector 30 which is determined for each tank pressure P1 in this way, as shown in FIG. 4, the duty ratio of the injector 30 corresponding to each gas flow rate when the gas flow rate is changed is measured for each tank pressure P1. FIG. 4 shows an example of the relationship of the gas flow rate and the duty ratio which are obtained for each tank pressure P1.

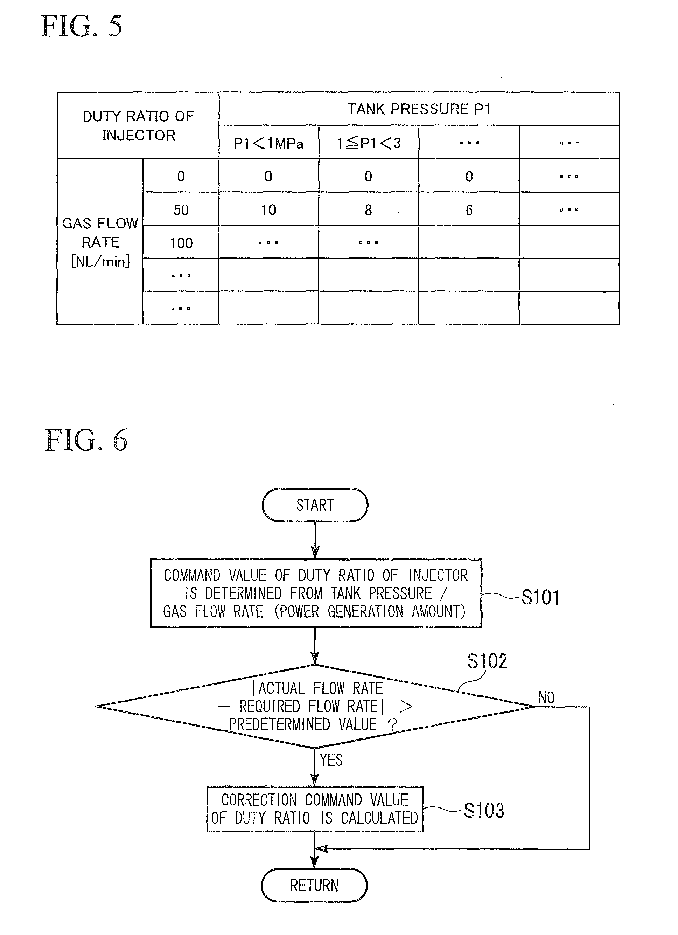

Subsequently, based on the measured results, as shown in FIG. 5, the duty ratio map in which the tank pressure P1, the gas flow rate, and the duty ratio of the injector 30 correspond to one another is prepared.

If the duty ratio map is stored in the control device 50, the duty ratio of the injector 30 can be determined based on the tank pressure P1 which is detected by the pressure sensor 8 and the required flow rate of the hydrogen gas which is calculated from the required power generation amount of the fuel cell stack 1. In addition, in a case where the required flow rate is between the gas flow rate value and the gas flow rate value which are described in the duty ratio map shown in FIG. 5, the duty ratio is determined using an interpolation method or the like. Moreover, since the fuel cell system in the present embodiment is mounted on the fuel cell vehicle, the required power generation amount is calculated from the control device 50 based on a stepping amount of an accelerator pedal (not shown).

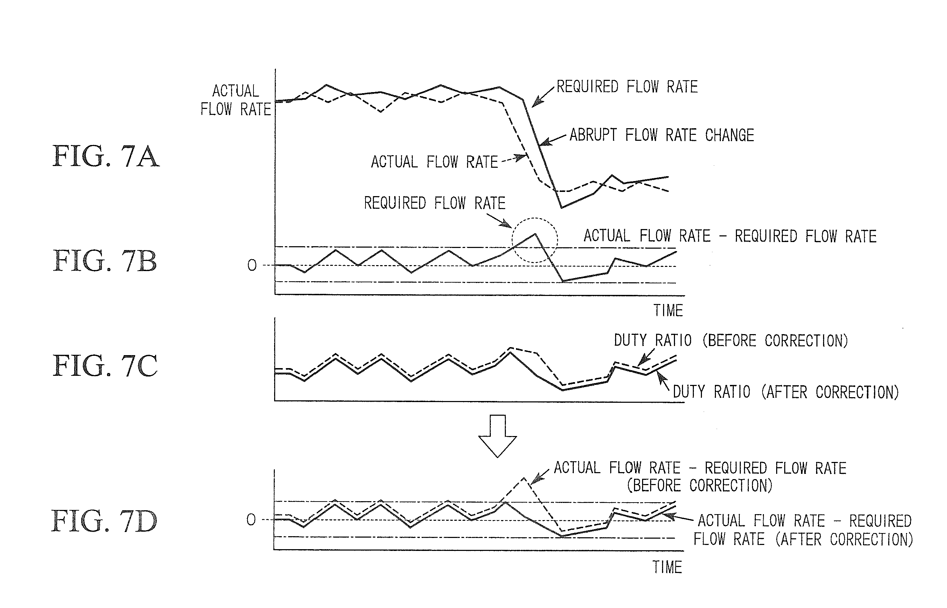

Incidentally, if the duty ratio of the injector 30 is determined using the duty ratio map of FIG. 5 based on the tank pressure P1 and the required flow rate of the hydrogen gas and the duty ratio of the injector 30 is controlled in this way, when the required flow rate of the hydrogen gas is abruptly changed as shown in FIG. 7A, due to a response delay of the pressure-reducing valve 5, a large error between an actual flow rate of the hydrogen gas which actually circulates through the pressure-reducing valve 5 and the required flow rate may occur as shown in FIG. 7B. Particularly, in the fuel cell system which is mounted on the vehicle, there is a high probability of the occurrence of abrupt change of the required power generation amount due to the acceleration and deceleration request of the vehicle and the like. In addition, FIG. 7A is a graph showing the change between the required flow rate and the actual flow rate, FIG. 7B is a graph showing a time-dependent change of the difference between the required flow rate and the actual flow rate, and in FIG. 7B, a broken line shows a case where the difference is zero and a dot and dashed line shows the admissible upper limit and the lower limit.

Therefore, if correction of the duty ratio of the injector 30 is performed based on the difference between the required flow rate and the actual flow rate and a feedback control is performed, responsiveness with respect to the required flow rate can be improved.

Next, the feedback control of the duty ratio of the injector 30 will be described according to a flowchart shown in FIG. 6. The feedback control of the duty ratio is repeatedly carried out using the control device 50 at every predetermined time.

First, in a step S 101, a duty ratio command value of the injector 30 is determined using the duty ratio map shown in FIG. 5 based on the tank pressure P1 of the hydrogen tank 2 which is detected using the pressure sensor 8 and the required flow rate of the hydrogen gas which is required in the fuel cell stack 1. Moreover, the required flow rate of the hydrogen gas is calculated based on the required power generation amount with respect to the fuel cell stack 1.

Subsequently, a step S 102 is advanced to and whether the absolute value of the difference between the actual flow rate measured using the flow rate sensor 6 and the required flow rate exceeds a predetermined value (allowable range) is determined.

When the determined result in the step S 102 is "NO" (the difference is within the allowable range), the duty ratio is not corrected since it is appropriate and is returned.

On the other hand, when the determined result in the step S 102 is "YES" (the difference is out of the allowable range), a step S 103 is advanced to, a correction amount of the duty ratio is calculated, the duty ratio command value set in the step S101 is corrected by the correction amount, and the duty ratio command value after the correction (duty ratio correction command value) is determined and is returned.

Moreover, as shown in the following Equation 3, the correction amount of the duty ratio can be calculated by multiplying the difference between the actual flow rate and the required flow rate by a constant A which is determined according to piping volume from the pressure-reducing valve 5 to the fuel cell stack 1, response performance of the injector 30, and the like.

Equation 3

$$\text{Correction Amount of Duty Ratio} = A \times (\text{Actual Flow Rate} - \text{Required Flow Rate})$$

FIG. 7C is a graph in which the time-dependent changes of the duty ratio of the injector 30 after and before the correction are compared to each other, FIG. 7D is a graph showing the time-dependent change of the difference between the required flow rate and the actual flow rate, and in FIG. 7D, a broken line shows a case where the difference is zero and a dot and dashed line shows the allowable upper limit and lower limit. If the duty ratio is corrected in this way, even when the required flow rate of the hydrogen gas is abruptly changed, the difference between the required flow rate and the actual flow rate can be within the allowable range.

In addition, as obvious from FIG. 3, between the flow rate of the gas which circulates through the pressure-reducing valve 5 and the outlet pressure (the pressure in the discharge port 15) P3, there is a correlation in that the larger the gas flow rate, the smaller the outlet pressure P3 and the smaller the gas flow rate, the larger the outlet pressure P3. Therefore, the required flow rate is substituted by a target outlet pressure, the actual flow rate is substituted by an actual outlet pressure, the duty ratio of the injector 30 is corrected based on the difference between the target outlet pressure and the actual outlet pressure, and thereby, the feedback control may be performed. In this case, the processing in the step S102 may be substituted by whether or not the absolute value of the difference between the target outlet pressure and the actual outlet exceeds a predetermined value (allowable range).

In the pressure-reducing valve 5, the shuttle valve 10 is opened due to the operation of the injector 30, and thereby, the circulation of the required flow rate in the shuttle valve 10 can be secured. Here, since the object of operating the injector 30 is to open the shuttle valve 10 by adjusting the pressure in the back-pressure chamber 25 of the shuttle valve 10 not to secure the required flow rate using the injector 30 itself, only the one injector 30 which is operated by a high fluid pressure is required. Moreover, the injector 30 adjusts the pressure of the back-pressure chamber 25, and as a result, the injector 30 has a function which adjusts the pressures in the discharging port 15 and the second hydrogen supply channel 3b.

In addition, since the structure of the shuttle valve 10 is simple and only the one injector 30 is required as described above, decreases in the size, the weight, and the costs of the pressure-reducing valve 5 can be achieved.

Moreover, since the main stop valve 4 which is a cutoff valve is provided in the upper stream of the pressure-reducing valve 5 and the high-pressure hydrogen gas can be shielded by the main stop valve 4, stability of the fuel cell system increases. In addition, since the main stop valve 4 is provided in the upper stream of the pressure-reducing valve 5, a complete seal of the injector 30 is not necessarily needed, and it is possible to simplify the fuel cell system.

Moreover, in the fuel cell system, due to the decreases in the size and the weight of the pressure-reducing valve 5, the decrease in the weight and compactness of the fuel cell can be realized, and decrease in the costs can be achieved.

In addition, the supply of the fuel gas according to the required power generation amount can be achieved using the control of the duty ratio of the injector 30. Particularly, when the duty ratio of the injector 30 is corrected based on the difference between the required flow rate and the actual flow rate and the feedback control is performed, responsiveness with respect to the required flow rate can be improved.

Other Embodiments

In addition, the present invention is not limited to the above-described embodiment.

For example, in the above-described embodiment, the aspect is described in which the high-pressure fluid is the high-pressure hydrogen gas, the hydrogen tank which stores this high-pressure hydrogen gas is the high-pressure fluid source, and the pressure-reducing valve is installed in the downstream of the hydrogen tank. However, the high-pressure fluid is not limited to the hydrogen gas, and other kinds of fluids may be also applied. Moreover, the high-pressure fluid source is also not limited to the storage tank and may be a high-pressure pump.

In addition, the fuel cell system is not limited to the system for a vehicle and may be the system for fixation.

In the above-described embodiment, the time interval is constant in the control of the duty ratio of the injector 30. However, the time interval may be variable. Controllability can be improved if the time interval is shortened. On the other hand, since the number of times of operation increases, attention has to be paid to durability. Therefore, for example, according to a power generation state (power generation mode) of the fuel cell, if the time interval is shortened when the output of the fuel cell is largely varied and the time interval is lengthened when the output is stable, it is possible to configure the fuel cell system in which both controllability and durability are achieved. While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

A pressure-reducing valve (5) with an injector of the present invention includes a shuttle valve body (13), a shuttle valve seat (18)in which the shuttle valve body (13) is capable of coming into contact with and be separated, a back-pressure chamber (25), a back-pressure channel (26) that communicates with the back-pressure chamber (25) and discharges the fluid of the back-pressure chamber (25), a biasing portion (14) that biases the shuttle valve body (13) in a direction of coming into contact with the shuttle valve seat (18), and an injector (30) that adjusts an intermittent time interval of the fluid in the back-pressure chamber (25) discharged through the back-pressure channel (26) and discharges the adjusted fluid to a discharging port (15) or a channel that communicates with the discharging port (15).

**Claims**

1.  A pressure-reducing valve with an injector comprising:

    a body that includes an internal space;
    an introduction channel provided in the body, introducing a high-pressure fluid into the internal space;
    a discharging channel provided in the body, discharging a depressurized fluid from the internal space;
    a shuttle valve body disposed between the introduction channel and the discharging channel in the internal space of the body;
    a shuttle valve seat which is provided in a position close to the internal space in the discharging channel, and at which the shuttle valve body is capable of coming into contact with the shuttle valve seat and the shuttle valve body is capable of separating from the shuttle valve seat;
    a back-pressure chamber surrounded by a back surface of the shuttle valve body and a wall surface of the internal space of the body, communicating with the introduction channel through a gap between the shuttle valve body and the wall surface of the internal space;
    a back-pressure channel communicating with the back-pressure chamber and discharging the fluid of the back-pressure chamber;
    a biasing portion biasing the shuttle valve body in a direction coming into contact with the shuttle valve seat; and
    an injector adjusting an intermittent time interval of the fluid in the back-pressure chamber discharged through the back-pressure channel and discharging the fluid to the discharging channel or a channel that communicates with the discharging channel.

2.  A fuel cell system comprising:

    a fuel cell to which fuel is supplied from a fuel supply passage and an oxidant is supplied from an oxidant supply system and in which electricity is generated; and
    a fuel circulation passage re-supplying fuel to the fuel cell by utilizing fuel off-gas discharged from the fuel cell, wherein the fuel supply passage includes a high-pressure fluid source, a cutoff valve, the pressure-reducing valve with the injector according to claim 1, and an ejector for circulating fuel in this order from an upper stream of the fuel supply passage.

FIG. 1

FIG. 2

## FIG. 3

OUTLET PRESSURE

DOWNSTREAM DEVICE UPPER LIMIT PRESSURE

OUTLET PRESSURE EXCEEDS UPPER LIMIT PRESSURE AND OPENING RESPONSIVENESS OF INJECTOR IS DETERIORATED

TANK PRESSURE: HIGH

TANK PRESSURE: MIDDLE

TANK PRESSURE: LOW

DOWNSTREAM DEVICE LOWER LIMIT PRESSURE

OUTLET PRESSURE EXCEEDS LOWER LIMIT PRESSURE AND OPENING RESPONSIVENESS OF INJECTOR IS DETERIORATED

GAS FLOW RATE

## FIG. 4

GAS FLOW RATE (POWER GENERATION AMOUNT)

TANK PRESSURE: HIGH    TANK PRESSURE: MIDDLE

TANK PRESSURE: LOW

DUTY RATIO OF INJECTOR

FIG. 5

| DUTY RATIO OF INJECTOR | | TANK PRESSURE P1 | | | |
|---|---|---|---|---|---|
| | | P1<1MPa | 1≦P1<3 | ・・・ | ・・・ |
| GAS FLOW RATE [NL/min] | 0 | 0 | 0 | 0 | ・・・ |
| | 50 | 10 | 8 | 6 | ・・・ |
| | 100 | ・・・ | ・・・ | | |
| | ・・・ | | | | |
| | ・・・ | | | | |

FIG. 6

```
                    ┌──────────┐
                    │  START   │
                    └────┬─────┘
                         │
        ┌────────────────▼────────────────────┐
        │ COMMAND VALUE OF DUTY RATIO OF INJECTOR │
        │     IS DETERMINED FROM TANK PRESSURE /   │──S101
        │ GAS FLOW RATE (POWER GENERATION AMOUNT) │
        └────────────────┬────────────────────┘
                         │                S102
                 ┌───────▼────────┐
               ╱  |ACTUAL FLOW RATE  ╲        NO
              ╱   - REQUIRED FLOW RATE| >      ╲────┐
              ╲    PREDETERMINED VALUE ?       ╱    │
               ╲────────┬───────────────╱          │
                        │YES                        │
        ┌───────────────▼──────────┐                │
        │  CORRECTION COMMAND VALUE  │──S103         │
        │ OF DUTY RATIO IS CALCULATED │              │
        └───────────────┬──────────┘                │
                        │◄──────────────────────────┘
                    ┌───▼──────┐
                    │  RETURN  │
                    └──────────┘
```

13

FIG. 7A

ACTUAL
FLOW RATE

REQUIRED FLOW RATE

ABRUPT FLOW RATE CHANGE

ACTUAL FLOW RATE

FIG. 7B

REQUIRED FLOW RATE

ACTUAL FLOW RATE - REQUIRED FLOW RATE

0

TIME

FIG. 7C

DUTY RATIO (BEFORE CORRECTION)

DUTY RATIO (AFTER CORRECTION)

FIG. 7D

ACTUAL FLOW RATE - REQUIRED FLOW RATE
(BEFORE CORRECTION)

0

ACTUAL FLOW RATE - REQUIRED
FLOW RATE (AFTER CORRECTION)

TIME

EP 2 581 799 A1

Europäisches
Patentamt

European
Patent Office

Office européen
des brevets

## EUROPEAN SEARCH REPORT

Application Number

EP 12 18 7956

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | US 2010/108161 A1 (ALBERINI VILIAM [IT] ET AL) 6 May 2010 (2010-05-06) | 1 | INV. G05D16/20 F02M21/02 H01M8/04 |
| Y | * the whole document * ----- | 2 | |
| Y | US 2009/032756 A1 (LEE HYUN JOON [KR] ET AL) 5 February 2009 (2009-02-05) * paragraphs [0033] - [0044]; figures 4,5 * ----- | 2 | |
| | | | **TECHNICAL FIELDS SEARCHED (IPC)**<br><br>G05D<br>F02M<br>H01M |

The present search report has been drawn up for all claims

| Place of search | Date of completion of the search | Examiner |
|---|---|---|
| Munich | 5 February 2013 | Vañó Gea, Joaquín |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 18 7956

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2013

| Patent document cited in search report | | Publication date | Patent family member(s) | | Publication date |
|---|---|---|---|---|---|
| US 2010108161 | A1 | 06-05-2010 | AT | 503100 T | 15-04-2011 |
| | | | AU | 2008206789 A1 | 24-07-2008 |
| | | | CA | 2674864 A1 | 24-07-2008 |
| | | | CN | 101627203 A | 13-01-2010 |
| | | | EP | 2122149 A2 | 25-11-2009 |
| | | | ES | 2363829 T3 | 17-08-2011 |
| | | | HK | 1138051 A1 | 16-03-2012 |
| | | | JP | 2010515993 A | 13-05-2010 |
| | | | KR | 20090117875 A | 13-11-2009 |
| | | | RU | 2009130581 A | 20-02-2011 |
| | | | US | 2010108161 A1 | 06-05-2010 |
| | | | WO | 2008087511 A2 | 24-07-2008 |
| US 2009032756 | A1 | 05-02-2009 | KR | 20100001162 A | 06-01-2010 |
| | | | US | 2009032756 A1 | 05-02-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008196401 A